# FASCICULE DE BREVET EUROPEEN

(11) **EP 3 016 846 B1**
(45) Date de publication et mention de la délivrance du brevet: **11.03.2020**
(21) Numéro de dépôt: 14739725.1
(22) Date de dépôt: 04.07.2014
(51) Int. Cl.: B62M 6/75

(54) **DISPOSITIF D'ASSISTANCE ÉLECTRIQUE POUR VÉLO ET VÉLO ÉQUIPÉ DUDIT DISPOSITIF**
ELEKTRISCHE HILFSANTRIEBSVORRICHTUNG FÜR FAHRRÄDER UND FAHRRAD MIT DIESER VORRICHTUNG
ELECTRIC POWER-ASSIST DEVICE FOR BICYCLES AND BICYCLE EQUIPPED WITH SAID DEVICE

(30) Priorité: 04.07.2013 FR 1356528
(43) Date de publication de la demande: 11.05.2016
(73) Titulaire: Compagnie Générale des Etablissements Michelin, 63000 Clermont-Ferrand (FR)
(72) Inventeur: OLSOMMER, David, F-63040 Clermont-Ferrand Cedex 9 (FR)
(74) Mandataire: Roussy, Delphine
(86) Numéro de dépôt international: PCT/EP2014/064377
(87) Numéro de publication internationale: WO 2015/001111

(56) Documents cités:
- DE-A1- 4 414 618
- DE-A1-102012 005 756
- DE-U1-202010 012 992
- JP-A- 2000 280 972
- JP-A- 2003 341 307
- JP-U- S61 200 707
- US-A- 5 842 535
- US-A1- 2007 222 170
- US-A1- 2011 114 407

## Description

La présente invention concerne les dispositifs d'assistance électrique pour vélo et les vélos équipés de tels dispositifs.

Dans ce domaine, on connaît un certain nombre de dispositifs disponibles sur le marché.

Certains de ces dispositifs utilisent une machine électrique placée dans le moyeu de l'une des roues du vélo. Cette machine électrique entraine la roue directement ou par l'intermédiaire d'un système de réduction. Ce type de dispositifs présente l'inconvénient d'une masse importante, cette masse étant en outre située au niveau de la roue ce qui la rend très sensible pour le cycliste. De plus, lorsque l'on doit démonter la roue, par exemple pour changer le pneumatique ou réparer une crevaison, le démontage de la roue est rendu complexe par la présence de connexions électriques qui sont nécessaires à l'alimentation de la machine électrique et de fixations spécifiques du moyeu qui sont nécessaires à la reprise du couple moteur.

D'autres dispositifs utilisent un groupe motoréducteur entrainant le pédalier du vélo et donc utilisant la transmission existante du vélo. Ce type de dispositifs présente l'inconvénient d'impacter profondément l'architecture du vélo de sorte qu'il nécessite en particulier que les cadres des vélos soient conçus spécifiquement pour accueillir ces dispositifs.

Le document DE-20314210-U1 décrit un principe d'entrainement d'un vélo par un moteur électrique dans lequel un pignon moteur engrène sur une denture solidaire du cercle de la jante avant du vélo, ladite denture étant une denture interne, c'est à dire dont les dents pointent vers l'axe de roue. Un inconvénient de ce système est que la denture de la jante est susceptible de retenir des cailloux.

On connaît par ailleurs le document DE 10 2010 012 992 U1 qui décrit un dispositif d'assistance électrique pour vélo, selon le préambule de la revendication 1. Le document décrit un dispositif d'assistance électrique du vélo qui comporte des moyens de fixation du dispositif portés par le bâti. Toutefois, l'entraînement de la roue de vélo se fait soit, comme dans le document précédent, au niveau d'une denture solidaire du cercle de la jante du vélo, soit par friction au niveau de la bande de roulement.

L'invention a donc pour objet de proposer un dispositif d'assistance électrique pour vélo ainsi qu'un vélo équipé dudit dispositif qui résolvent tout ou partie de ces difficultés.

L'invention propose pour cela un dispositif d'assistance électrique pour vélo selon la revendication 1 .

De préférence, des moyens de contrôle de la machine électrique sont également portés par le bâti.

De préférence encore, le dispositif d'assistance électrique comprend en outre une batterie pour alimenter la machine électrique, la batterie étant également portée par le bâti.

De préférence, le sous-ensemble manuellement séparable du bâti comprend les moyens de contrôle de la machine électrique.

De préférence encore, le sous-ensemble manuellement séparable du bâti comprend en outre la batterie.

De préférence encore, la batterie est en outre manuellement séparable du bâti indépendamment du sous-ensemble.

De préférence, le sous-ensemble est porté par un encadrement s'étendant dans un plan sensiblement horizontal, ledit sous-ensemble étant séparable horizontalement du bâti, de préférence, de préférence transversalement.

De préférence, le bâti comprend un connecteur électrique rapide pour connecter le sous-ensemble à des interfaces solidaires du vélo.

De préférence, le bâti constitue en outre un porte-bagages.

De préférence, les moyens de fixation comprennent un bras oscillant articulé par rapport à une embase portée par le bâti selon un axe sensiblement parallèle à l'axe de la machine électrique.

De préférence, le bras oscillant comporte une articulation permettant de replier la machine électrique contre le sous-ensemble.

L'invention concerne également un kit d'assistance électrique pour vélo comprenant le dispositif d'assistance électrique décrit ci-dessus, ledit kit d'assistance électrique comprenant en outre un bandage ledit bandage étant un bandage pneumatique comportant ladite denture complémentaire.

L'invention concerne enfin un vélo à assistance électrique comprenant un tel kit d'assistance électrique.

D'autres caractéristiques et avantages de l'invention apparaîtront grâce à la description de modes préférés de réalisation. Les figures représentent respectivement:
- Figure 1 : vue (partielle) de côté d'un vélo à assistance électrique selon un premier mode de réalisation de l'invention.
- Figure 2 : vue détaillée du sous-ensemble selon un mode de réalisation préféré de l'invention.
- Figure 3 : vue de dessous du sous-ensemble de la figure 2.
- Figure 4 : vue détaillée à plus grande échelle du dispositif d'assistance électrique et du vélo à assistance électrique de la figure 1.
- Figure 5 : vue détaillée montrant en particulier le bâti du dispositif d'assistance électrique de la figure 1.
- Figure 6 : vue similaire à celle de la figure 4 depuis l'autre côté du vélo à assistance électrique de la figure 1.
- Figure 7 : vue similaire à la figure 1 montrant un autre mode de réalisation préféré du dispositif de l'invention.
- Figure 8 : vue identique à la figure 7 dans laquelle la batterie est extraite.
- Figure 9 : vue détaillée du dispositif des figures 7 et 8.
- Figure 10 : vue encore plus détaillée du dispositif selon la figure 8.
- Figure 11 : vue de la batterie équipant le dispositif des figures 7 et 8.
- Figure 12 : vue générale du sous-ensemble selon une variante du deuxième mode de réalisation préféré de l'invention.
- Figure 13 : vue schématique en coupe montrant la coopération de la machine électrique avec le bandage d'un vélo à assistance électrique selon l'invention.
- Figure 14 : vue de détail en coupe de l'engrènement du pignon moteur avec la denture du bandage selon un mode de réalisation préféré de l'invention.
- Figure 15 : vue schématique en coupe du détail de la denture du pignon moteur de la figure 14.
- Figure 16 : vue schématique en coupe du détail d'une denture d'un mode de réalisation préféré d'un bandage selon l'invention.
- Figure 17 : vue de côté d'un pignon moteur à denture hélicoïdale selon un mode de réalisation préféré du dispositif de l'invention.
- Figure 18 : vue en coupe et en perspective d'un bandage pneumatique équipant un vélo selon l'invention.
- Figure 19 : vue (partielle) de côté d'un vélo à assistance électrique selon un troisième mode de réalisation de l'invention.
- Figure 20 et 21 : vues détaillées du sous-ensemble de la figure 19.

Les figures représentent différentes vues d'ensemble et de détails de modes de réalisation préférés d'un dispositif d'assistance électrique et d'un vélo à assistance électrique selon l'invention. Sur les différentes figures, les éléments identiques ou similaires portent des références identiques. Les références ne sont pas systématiquement reprises sur chaque figure afin de simplifier la compréhension des dessins.

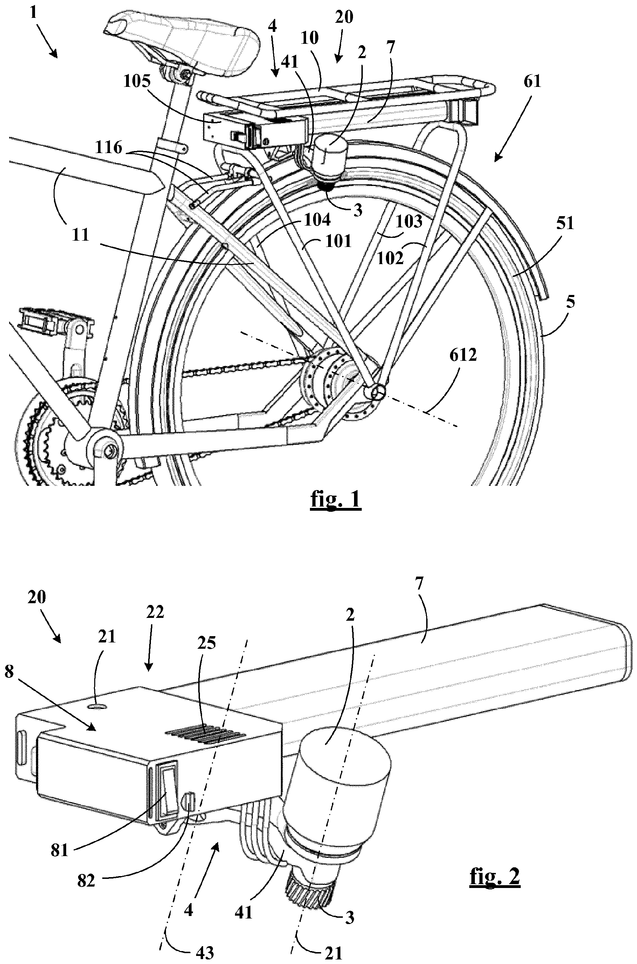

À la figure 1, on voit les éléments principaux d'un vélo à assistance électrique selon l'invention. Une machine électrique 2 est fixée à proximité d'un bandage 5, ici à proximité du bandage de la roue arrière 61. Un pignon moteur 3 engrène tangentiellement avec une denture 51 solidaire du bandage 5 et peut ainsi lui transmettre une force motrice qui assiste le cycliste. La machine électrique est de préférence un moteur synchrone triphasé sans balai à aimants permanents. De préférence encore le rotor est un rotor externe comme représenté sur les figures. Une batterie 7, alimente la machine électrique.

Les moyens de fixation 4 de la machine électrique sont portés par un bâti 10, lui-même fixé au cadre 11 du vélo. Des bras 101, 102, 103, 104 du bâti sont de préférence fixés sur l'axe de la roue 612. Des tirants 116 immobilisent la rotation du bâti autour de l'axe de la roue. La fixation du bâti sur l'axe de la roue permet un montage simple tout en garantissant une grande précision et reproductibilité du positionnement du pignon moteur 3 par rapport à la denture 51 du bandage.

De préférence, la batterie est également portée par le bâti comme représenté ici. Alternativement, la batterie peut être fixée à sur une autre partie du vélo de manière connue en soi.

De préférence les moyens de contrôle 8 de la machine électrique, c'est à dire l'électronique de contrôle et l'électronique de puissance, sont également portés par le bâti.

Un sous-ensemble séparable 20 est constitué des moyens de fixations et de la machine électrique. Ce sous-ensemble est manuellement séparable du bâti, c'est à dire sans l'aide d'aucun outil. De préférence, le sous-ensemble 20 comprend en outre les moyens de contrôle 8.

Dans les modes de réalisation où la batterie 7 est portée par le bâti, le sous-ensemble séparable peut également comprendre ladite batterie comme représenté à la figure 2. On comprend que le fait de retirer un tel sous-ensemble 20 du bâti permet d'utiliser le vélo sans assistance électrique mais aussi sans le surpoids associé à une assistance électrique et à sa source d'énergie.

Dans le mode de réalisation représenté ici, les moyens de contrôle 8 comprennent un commutateur 81 permettant au cycliste de mettre en marche ou d'éteindre le dispositif d'assistance et un bouton rotatif 82 de réglage du niveau d'assistance. Ces commandes peuvent également être placées sur le guidon du vélo ou contrôlées à distance par l'intermédiaire d'une télécommande ou d'une application installée dans un téléphone mobile du cycliste. Une prise d'alimentation électrique 21 pour la recharge de la batterie est accessible y compris lorsque le sous-ensemble est monté dans le bâti.

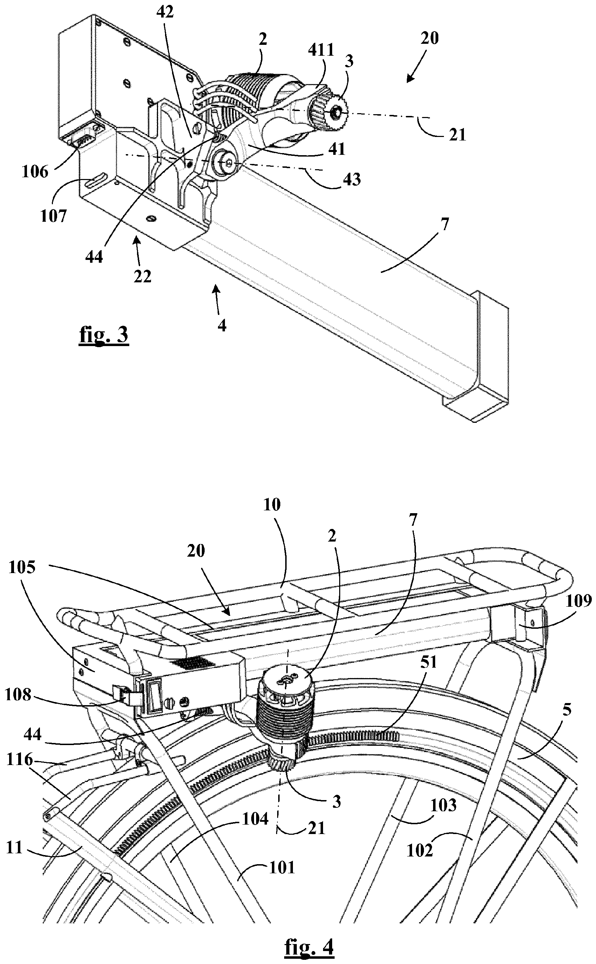

La figure 3 montre ce sous-ensemble 20 en vue de dessous. On peut y voir que les moyens de fixation 4 de la machine électrique comprennent de préférence un bras oscillant 41 et une embase 42, l'embase étant destinée à être solidaire du bâti et le bras oscillant 41 étant articulé par rapport à l'embase selon un axe d'oscillation 43 sensiblement parallèle à l'axe 21 de la machine électrique. Un ressort 44 vient contraindre le bras de manière à ce que le pignon soit appliqué avec une certaine force d'appui minimale contre le bandage. On voit également sur la figure 3 un connecteur électrique rapide 106 et une encoche 107 pour les moyens de verrouillage à clé.

Convenons d'appeler « bloc moteur » l'ensemble mécanique correspondant au sous-ensemble séparable 20 sans sa batterie. Le bloc moteur 22 comprend donc en particulier l'embase 42, le bras oscillant 41, la machine électrique 2 et de préférence aussi les circuits électroniques de puissance et de contrôle. On comprend que c'est ce bloc moteur qui doit être fermement solidaire du bâti lorsque le dispositif d'assistance électrique est utilisé. Des ailettes 25 peuvent être prévues sur une ou plusieurs des faces du bloc moteur 22 (voir figure 2) afin d'améliorer le refroidissement de l'électronique de puissance située à l'intérieur du bloc moteur 22 en contact avec la ou les faces munies d'ailettes 25. Ce principe de refroidissement est particulièrement efficace dans le cas où le bloc moteur ou les ailettes sont réalisées dans un matériau bon conducteur thermique comme par exemple l'aluminium.

A la figure 4, on voit mieux le bâti 10 portant le sous-ensemble séparable 20. On voit que le bâti comporte un encadrement 105 s'étendant dans un plan sensiblement horizontal. Le sous-ensemble 20 peut être glissé horizontalement dans l'encadrement et y être fixé par une attache rapide 108 à l'avant de celui-ci. L'extrémité arrière du sous-ensemble 20 (constitué par la partie arrière de la batterie) est bloquée dans l'encadrement par une butée fixe 109.

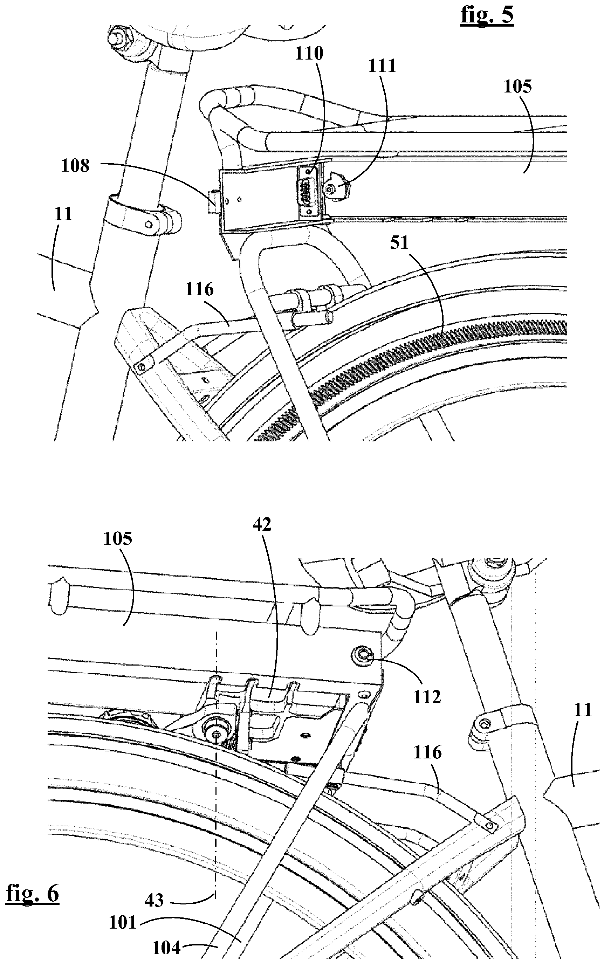

A la figure 5, le sous-ensemble 20 est extrait et on voit un connecteur électrique stationnaire 110 apte à coopérer avec le connecteur 106 du sous-ensemble. Le connecteur stationnaire 110 peut permettre de relier le dispositif d'assistance électrique à des interfaces ou des capteurs installés sur le vélo. Une interface de commande au guidon peut être prévue pour l'accès à des informations et/ou pour le contrôle du dispositif par le cycliste. Parmi les capteurs qui peuvent être utiles pour la commande dispositif d'assistance électrique, citons par exemple les capteurs de pédalage, capteur de couple de pédalage, capteur de vitesse. Le connecteur peut également servir à alimenter l'éclairage du vélo à partir de la batterie 7. On voit également des moyens de verrouillage 111 ainsi que l'attache rapide 108. On comprend en comparant principalement les figure 3, 4 et 5 que l'installation du sous-ensemble 20 selon ce mode de réalisation consiste à placer l'extrémité de la batterie en position derrière la butée fixe 109 puis à pivoter dans un plan horizontal l'avant du sous-ensemble 20 jusqu'à pouvoir enclencher l'attache rapide 108. Dans cette position, le connecteur stationnaire 110 est bien associé au connecteur 106 du sous-ensemble et les moyens de verrouillage 111 (par exemple à clé) peuvent être actionnés et coopérer avec l'encoche 107 du sous-ensemble (visible sur la figure 3) pour le sécuriser si nécessaire en position d'utilisation. Dans un autre mode de réalisation non représenté sur les figures, il est possible d'avoir un système dont le bloc moteur 22, ainsi que les connecteurs électriques 106 et 110, ainsi que le système de verrouillage 107, 111 et 112 sont situés non pas à l'avant du bâti 10 comme décrit sur les figures 1 à 12, mais à l'arrière du bâti 10. Dans un tel mode de réalisation, la butée 109 serait alors située à l'avant du bâti 10.

La figure 6 montre depuis l'autre côté du vélo, le même sous-ensemble installé dans le bâti. On voit en particulier le barillet 112 du verrouillage à clé.

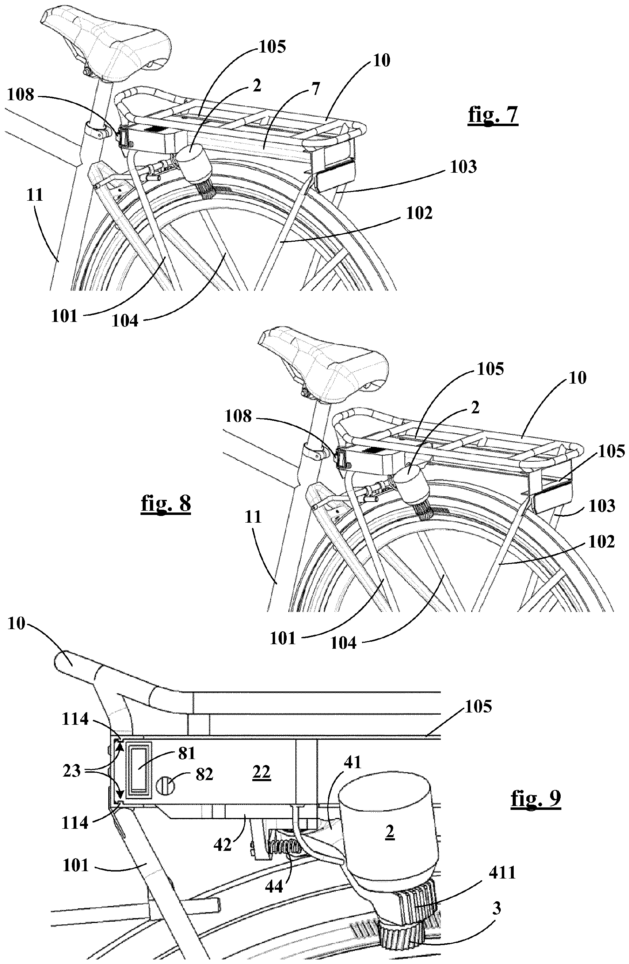

Sur les figures 7 à 12, on a représenté un deuxième mode de réalisation préféré de l'invention dans lequel la batterie 7 est séparable du sous ensemble 20 et peut être extraite du bâti indépendamment du reste du sous ensemble, c'est à dire indépendamment du bloc moteur 22.

La figure 7 montre le dispositif lorsque la batterie est en place et la figure 8 montre le dispositif lorsque la batterie seule est extraite. On comprend que la batterie est extraite horizontalement du bâti selon un mouvement longitudinal vers l'arrière.

La figure 9 fait en particulier apparaître les nervures transversales 114 de l'encadrement 105 qui coopèrent avec des rainures transversales 23 du bloc moteur. Cette disposition permet de guider le sous-ensemble lors de son installation dans l'encadrement et assure un maintien rigide et fiable de l'embase 42 et donc des moyens de fixations de la machine électrique 2. Selon ce mode de réalisation, le sous-ensemble doit donc être extrait horizontalement et selon un mouvement transversal. Lors de cette extraction, la batterie peut demeurer solidaire du bloc moteur (comme représenté à la figure 7) et donc suivre le même mouvement. La batterie peut également avoir été extraite précédemment par l'arrière du bâti comme représenté à la figure 8.

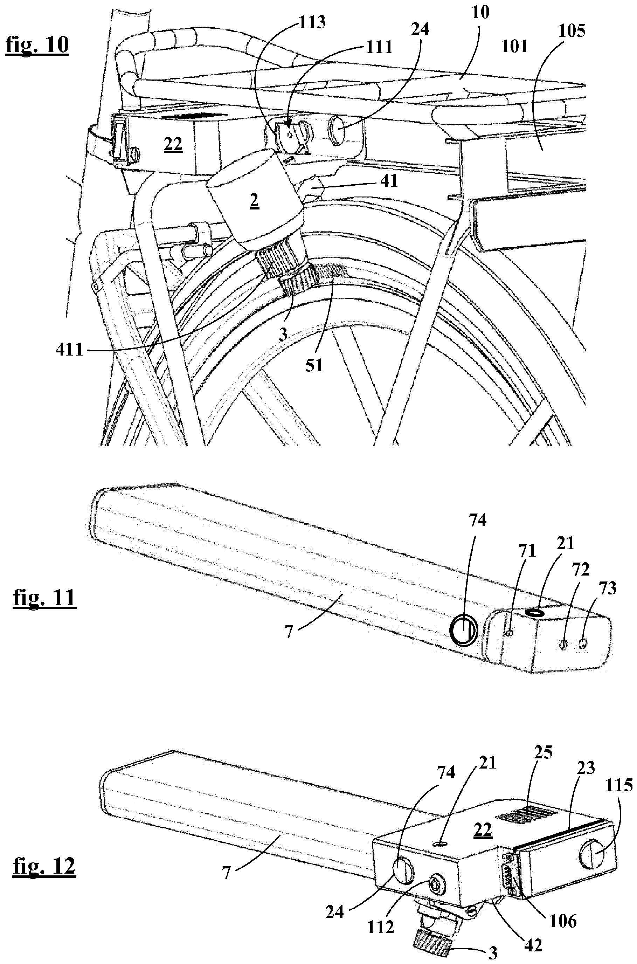

À la figure 10, on voit sous un angle différent le même sous-ensemble en place dans le bâti sans la batterie. Cette vue fait apparaître les moyens de verrouillage 111 qui sont adaptés aux différentes situations et manipulation décrites ci-dessus. Le secteur des moyens de verrouillage 111 comporte une rainure incurvée 113 destinée à coopérer avec un doigt 71 de la batterie (voir figure 11) pour sélectivement la bloquer en place ou permettre son extraction selon la position angulaire du secteur. Les moyens de verrouillage comportent une troisième position permettant de libérer et donc d'extraire le sous-ensemble complet (ou le bloc moteur dans le cas où la batterie a déjà été extraite). On comprend que la position représentée à la figure 9 est celle qui autorise l'extraction de la batterie tout en maintenant le bloc moteur verrouillé. Sur les figures 9 et 10, on voit également des ailettes de refroidissement 411 issues du bras oscillant 41. Ces ailettes favorisent le refroidissement du stator de la machine électrique par l'air ambiant puisque le stator interne de la machine électrique est solidaire du bras 41 (voir également la figure 3).

Comme visible à la figure 11, la batterie comporte un bouton élastique 74 destiné à coopérer avec une ouverture 24 du sous-ensemble (voir figure 10) pour assurer une liaison rapide et sûre (par clipsage) de la batterie 7 au bloc moteur 22, y compris en l'absence de verrouillage. La batterie comporte également deux contacts 72 et 73 pour sa connexion électrique au bloc moteur, ainsi qu'une prise pour la recharge 21.

La figure 12 montre le sous-ensemble 20 complet selon une variante de ce mode de réalisation dans laquelle le bloc moteur comprend également un bouton élastique 115 similaire au bouton élastique 74 de la batterie. Le bouton élastique 115 est destiné à coopérer avec une ouverture pratiquée sur la face avant de l'encadrement 105 afin d'assurer une liaison rapide et sûre (par clipsage) du bloc moteur 22 au bâti, y compris en l'absence de verrouillage.

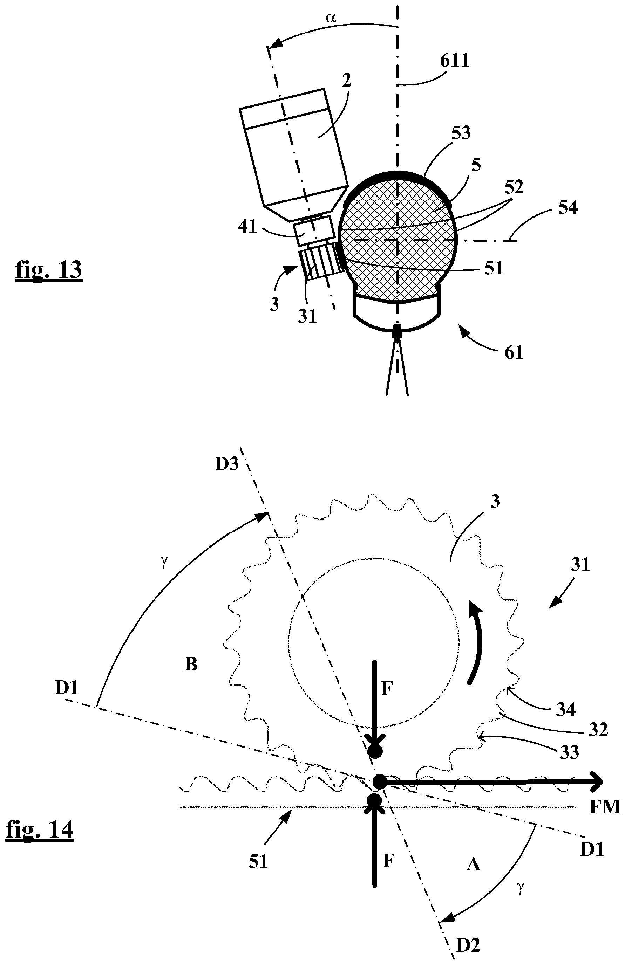

A la figure 13 on a représenté en vue selon le plan de la roue un mode de réalisation préféré de la coopération entre la machine électrique 2 et le bandage 5. On voit la denture 31 du pignon moteur 3 engrener tangentiellement avec la denture complémentaire 51 du bandage. La machine électrique est inclinée d'un angle α par rapport au plan 611 de la roue 61. Selon l'invention, l'angle α peut varier mais il est de préférence compris entre - 10° et + 30°. Sur cet exemple α vaut environ 25°, la denture 51 est solidaire d'un flanc 52 du bandage et se situe radialement sous l'équateur 54. Le bandage peut être un bandage pneumatique ou non-pneumatique, voire un bandage plein.

De préférence, la machine électrique entraine directement le pignon moteur, c'est à dire sans aucun moyen de réduction intermédiaire, le pignon étant porté par l'arbre de la machine électrique. Selon un mode de réalisation préféré de l'invention, un mécanisme de roue libre est cependant interposé entre l'arbre et le pignon de sorte que le bandage n'entraine pas la machine électrique lorsque le vélo se déplace en marche avant. Dans l'hypothèse où le dispositif ne comprendrait pas de roue-libre, une récupération d'énergie électrique peut être réalisée lorsque le cycliste freine.

Comme représenté sur l'ensemble des figures, la machine électrique 2 est de préférence placée radialement à l'extérieur du pignon moteur 3 par rapport à l'axe 612 de la roue du vélo, c'est à dire au-dessus du pignon moteur 3 dans cette configuration.

La figure 14 montre en détail l'engrènement du pignon moteur 3 sur le bandage. Le pignon transmet au bandage une force motrice FM. On voit ici un mode de réalisation préféré dans lequel les dents 32 du pignon sont asymétriques et configurées de sorte que l'angle d'ouverture de leurs faces motrices 33 est plus faible que l'angle d'ouverture de leurs faces non-motrices 34. La forme de la denture complémentaire 51 solidaire du bandage est naturellement adaptée en conséquence. Cette disposition permet d'améliorer sensiblement le rendement de l'engrènement ainsi que d'augmenter la valeur maximale de la force motrice FM transmissible. On a également représenté la force d'appui F du pignon sur le bandage. Cette force est transmise par les moyens de fixation de la machine électrique et a pour effet de maintenir l'engrènement même en cas de déformations des différents éléments du dispositif. Si on appelle F0 la force d'appui du pignon en l'absence de force motrice et que l'on appelle FD la force dynamique supplémentaire engendrée par l'effet de la force motrice, on peut dire que F = F0 + FD.

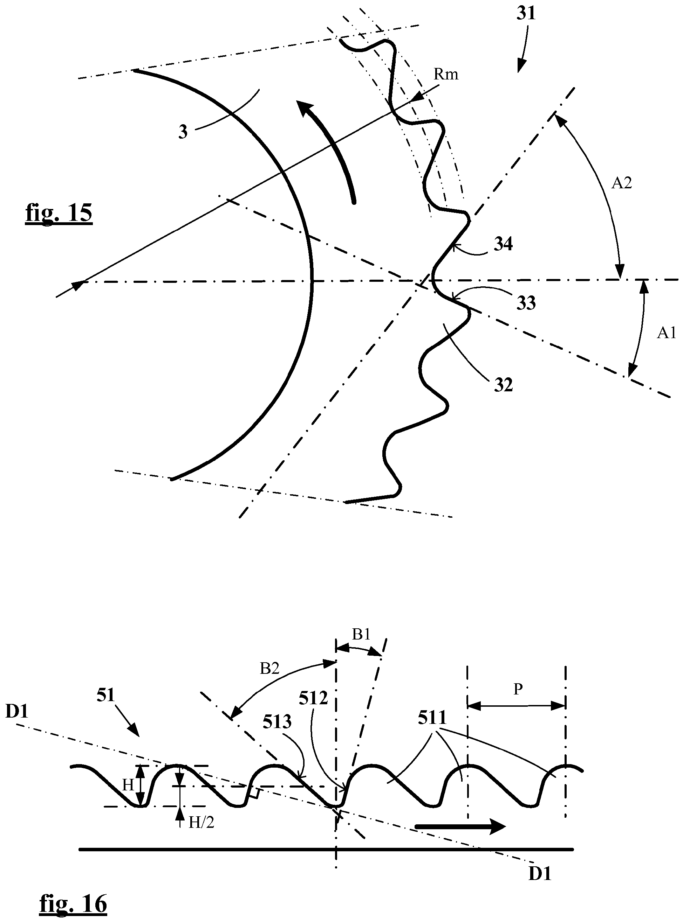

La droite D1 est la droite perpendiculaire à la tangente des dentures au point de contact à mi-hauteur des dents (voir également figure 16). Les demi-droites D2 et D3 sont écartées de D1 d'un angle γ. Le secteur A correspond à la surface comprise entre la droite D1 et la demi-droite D2. Le secteur B correspond à la surface comprise entre la droite D1 et la demi-droite D3. De préférence, l'angle y n'excède pas 60°. Une manière de s'assurer que la force motrice génère une force d'appui dynamique supplémentaire est de vérifier que la position de l'intersection de l'axe 43 avec le plan médian du pignon respecte l'une des conditions suivantes :

Si l'axe 43 est situé à l'avant du pignon par rapport au sens d'avancement du vélo (cas représenté sur les figures 1 à 12), l'intersection doit être située dans le secteur A représenté à la figure 14.

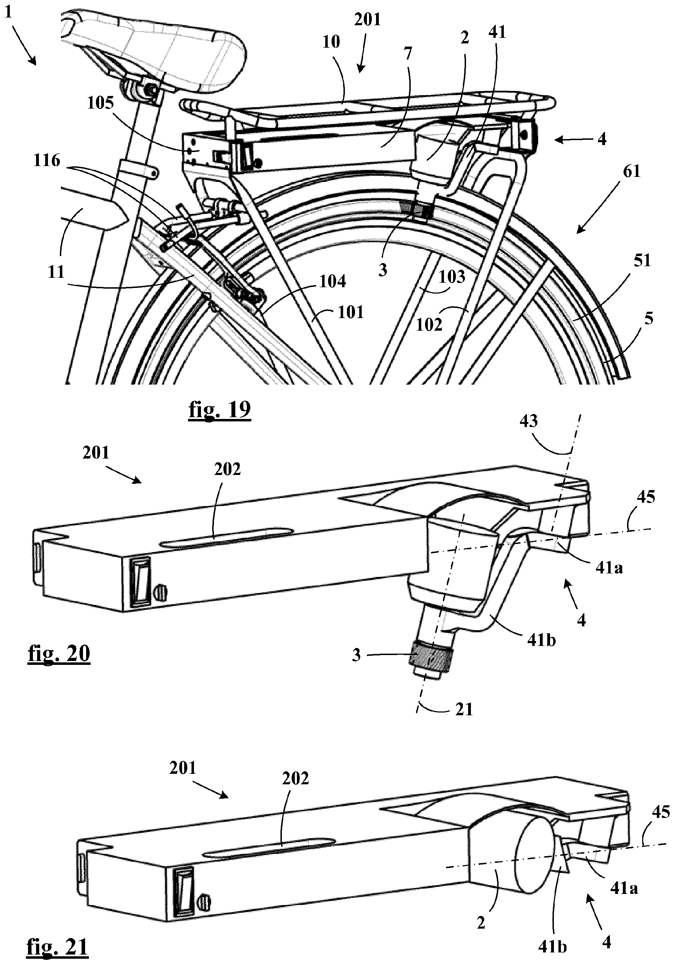

Si l'axe 43 est situé à l'arrière du pignon par rapport au sens d'avancement du vélo (cas des figures 19 à 21), l'intersection doit être située dans le secteur B représenté à la figure 14.

A la figure 15, on a représenté à une plus grande échelle la denture 31 du pignon 3 afin de mieux visualiser le mode de réalisation asymétrique préféré décrit à la figure 12. On voit que l'angle d'ouverture A1 des faces motrices 33 est sensiblement plus faible que l'angle d'ouverture A2 des faces non-motrices 34.

A la figure 16, on a représenté à une plus grande échelle la denture 51 du bandage afin de mieux visualiser un mode de réalisation préféré. Selon la même logique que pour le pignon moteur, les dents 511 de la denture du bandage ont des faces motrices 512 et des faces non-motrices 513. On voit que l'angle d'ouverture B1 des faces motrices 512 est sensiblement plus faible que l'angle d'ouverture B2 des faces non-motrices 513. La denture a un pas P et une hauteur H. Le pas de la denture est de préférence compris entre 1,8 mm et 5,5 mm. On a également représenté sur cette figure la droite D1 évoquée plus haut en référence à la figure 14.

Les figures 15 et 16 illustrent des dentures comportant des faces rectilignes. Dans le cas de faces courbes, les angles décrits ci-dessus doivent être mesurés en considérant la tangente au point du profil correspondant à la demi-hauteur de dent (voir le rayon moyen Rm sur la figure 15 et la demi-hauteur H/2 sur la figure 16).

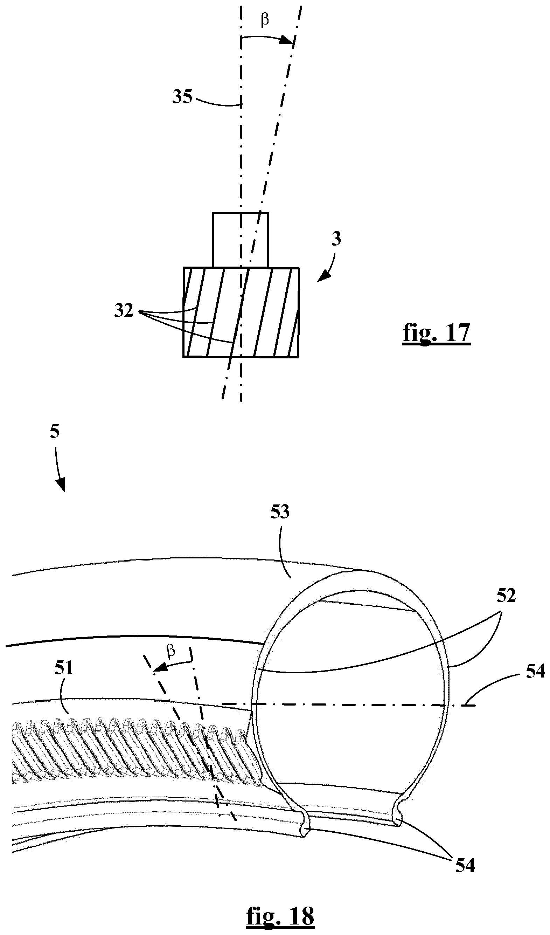

À la figure 17 on a représenté un mode de réalisation préféré du pignon moteur 3 dans lequel la denture est une denture hélicoïdale similaire à celles visibles sur les figures 1 à 12. L'axe des dents 32 est incliné d'un angle β par rapport à l'axe 35 du pignon et donc par rapport à l'arbre de la machine électrique 21. L'angle β représenté ici est d'environ 15°, mais il peut par exemple être compris entre 4 et 40° et de préférence entre 10 et 30°. L'inclinaison de la denture du bandage doit naturellement être adaptée en conséquence. Cette disposition permet de réduire sensiblement le bruit émis par l'engrènement. De préférence, le pignon moteur 3 est réalisé en métal, par exemple en acier. Le cas échéant, la roue-libre évoquée plus haut peut être intégrée à l'intérieur du pignon.

À la figure 18, on voit un mode de réalisation préféré du bandage 5. Il s'agit ici d'un bandage pneumatique comprenant de manière connue en soi des flancs 52, une bande de roulement 53 et des tringles 54 pour son ancrage sur une jante de vélo non représentée. On voit également que les dents de la denture 51 solidaire du flanc sont inclinées par rapport à la direction radiale du bandage d'un angle correspondant à l'angle d'hélice β décrit pour le pignon moteur en référence à la figure 17.

De préférence, la denture du bandage est principalement constituée de caoutchouc d'une dureté Shore A comprise de préférence entre 55 et 85. La denture est de préférence moulée en même temps que le bandage pneumatique mais elle peut aussi être rapportée sur un pneumatique conventionnel moulé précédemment.

Un renfort textile peut être associé à la surface de la denture afin de limiter l'usure par abrasion et le bruit de denture. Il est avantageux d'utiliser des tissus de renfort textile de type polyamide, tissés de manière à être extensibles lors du moulage de la denture.

De manière préférée et comme déjà représenté sur la figure 13, la denture 51 est placée radialement sous l'équateur 54 du pneumatique 5. Alternativement, la denture peut être placée à l'épaule du pneumatique, c'est à dire à proximité de la bande de roulement 53, voire au centre de la bande de roulement 53, en position horizontale.

à la figure 19, on a représenté un troisième mode de réalisation du dispositif d'assistance électrique selon l'invention dans lequel l'axe 43 d'oscillation du bras est situé à l'arrière du pignon par rapport au sens d'avancement du vélo. Sur cet exemple, l'angle α vaut environ 5° et l'angle β vaut environ 24°. Notons que ces angles sont également tout à fait applicables dans les configurations des figures précédentes.

Aux figures 20 et 21, on voit à plus grande échelle le sous-ensemble extractible 201 de la figure 19. Le bras 41 comprend ici une articulation selon un axe de repli 45. Cette articulation permet le repli de la machine électrique contre l'embase lorsque l'assistance n'est pas mise en œuvre. Ainsi, on obtient un sous-ensemble sensiblement plat et compact facilitant son transport et son stockage. L'opération de repli de la machine électrique peut se faire par l'intermédiaire d'un actionneur de préférence électrique ou manuellement par rotation du demi-bras oscillant 41b par rapport au demi-bras oscillant 41a autour de l'axe de repli 45 qui est ici sensiblement parallèle à la direction d'avancement du vélo. La remise en position de fonctionnement se fait de manière inverse en retirant la machine électrique en rotation autour de l'axe 45 jusqu'à sa position de travail, la position de travail étant déterminée par une butée en rotation (non représentée) entre les demi-bras oscillants 41a et 41b. On voit également sur ces figures une ouverture 202 qui peut être débouchante et fait office de poignée facilitant la préhension du sous-ensemble pour sa mise en place, son extraction ainsi que son transport.

Un kit d'assistance électrique selon l'invention comprend donc un dispositif d'assistance électrique tel que décrit en référence aux différents modes de réalisation illustrés par les figures et un bandage comportant une denture adaptée, de préférence un bandage pneumatique tel que décrit plus haut en référence à la figure 18.

Dans un mode de réalisation de l'invention (non représenté) le sous-ensemble séparable peut également comporter une connexion de type USB permettant par exemple de configurer ou mettre à jour les moyens de contrôle à partir d'un ordinateur ou permettant la recharge d'un téléphone portable.

En alternative, le dispositif pourrait comporter des bras 101, 102, 103 et 104 fixés ailleurs qu'à l'axe de la roue 612, par exemple fixés sur les haubans du cadre, au-dessus de l'axe de la roue.

## Revendications

1. Dispositif d'assistance électrique pour vélo, ledit dispositif comprenant :
- une machine électrique (2) comprenant un rotor,
- des moyens de fixation (4) de la machine électrique,
- un pignon moteur (3) entrainé par le rotor de la machine électrique, et
- un bâti (10),
- les moyens de fixation (4) étant portés par le bâti (10),
ledit dispositif étant **caractérisé en ce que** le pignon moteur (3) est apte à engrener tangentiellement avec une denture complémentaire (51) solidaire d'un bandage (5) d'une roue arrière (61) du vélo et **en ce que** les moyens de fixation (4) forment avec la machine électrique un sous-ensemble (20) manuellement séparable du bâti, le bâti (10) comportant un encadrement (105) s'étendant dans un plan sensiblement horizontal et le sous-ensemble est porté par un encadrement (105) et **caractérisé par** une attache rapide (108) réalisés de manière à ce que le sous-ensemble (20) puisse être glissé horizontalement dans l'encadrement (105) et y être fixé par l'attache rapide (108) à l'avant de celui-ci, et l'extrémité arrière du sous-ensemble (20) est bloquée dans l'encadrement par une butée fixe (109).

2. Dispositif d'assistance électrique pour vélo selon la revendication 1 dans lequel des moyens de contrôle (8) de la machine électrique sont également portés par le bâti (10).

3. Dispositif d'assistance électrique pour vélo selon la revendication 2 comprenant en outre une batterie (7) pour alimenter la machine électrique, dans lequel la batterie est également portée par le bâti (10).

4. Dispositif d'assistance électrique pour vélo selon l'une des revendications précédentes dans lequel le sous-ensemble (20) manuellement séparable du bâti (10) comprend les moyens de contrôle (8) de la machine électrique.

5. Dispositif d'assistance électrique pour vélo selon la revendication 4 dans lequel le sous-ensemble (20) manuellement séparable du bâti comprend la batterie (7).

6. Dispositif d'assistance électrique pour vélo selon la revendication 5 dans lequel la machine électrique (2) peut être repliée contre le sous-ensemble (20).

7. Dispositif d'assistance électrique pour vélo selon la revendication 6 dans lequel la batterie (7) est en outre manuellement séparable du bâti (10) indépendamment du sous-ensemble (20).

8. Dispositif d'assistance électrique pour vélo selon la revendication 1 dans lequel le sous-ensemble (20) est séparable transversalement du bâti (10).

9. Dispositif d'assistance électrique pour vélo selon l'une des revendications précédentes dans lequel le bâti comprend des connecteurs électriques rapides pour connecter le sous-ensemble à des interfaces solidaires du vélo.

10. Dispositif d'assistance électrique pour vélo selon l'une des revendications précédentes dans lequel le bâti (10) constitue en outre un porte-bagages.

11. Dispositif d'assistance électrique pour vélo selon l'une des revendications précédentes dans lequel les moyens de fixation comprennent un bras oscillant (41) articulé par rapport à une embase (42) portée par le bâti selon un axe (43) sensiblement parallèle à l'axe (21) de la machine électrique.

12. Kit d'assistance électrique pour vélo comprenant le dispositif d'assistance électrique selon l'une des revendications précédentes, ledit kit d'assistance électrique comprenant en outre un bandage (5), ledit bandage étant un bandage pneumatique comportant ladite denture complémentaire (51).

13. Vélo (1) à assistance électrique comprenant le kit d'assistance électrique selon la revendication 12.

## Patentansprüche

1. Elektrische Hilfsantriebsvorrichtung für ein Fahrrad, wobei die Vorrichtung umfasst:
- eine elektrische Maschine (2), die einen Rotor umfasst,
- Mittel zur Befestigung (4) der elektrischen Maschine,
- ein Antriebsritzel (3), das vom Rotor der elektrischen Maschine angetrieben wird, und
- ein Gestell (10),
- wobei die Befestigungsmittel (4) von dem Gestell (10) getragen werden,
wobei die Vorrichtung **dadurch gekennzeichnet ist, dass** das Antriebsritzel (3) geeignet ist, tangential mit einer komplementären Verzahnung (51) in Eingriff zu gelangen, die mit einem Reifen (5) eines Hinterrades (61) des Fahrrads fest verbunden ist, und dadurch, dass die Befestigungsmittel (4) mit der elektrischen Maschine eine Baugruppe (20) bilden, die manuell von dem Gestell trennbar ist, wobei das Gestell (10) eine Umrahmung (105) aufweist, die sich in einer im Wesentlichen horizontalen Ebene erstreckt, und die Baugruppe von einer Umrahmung (105) getragen wird und durch eine Schnellbefestigung (108) gekennzeichnet ist, die derart ausgebildet sind, dass die Baugruppe (20) horizontal in der Umrahmung (105) gleiten und dort durch die Schnellbefestigung (108) vorn an dieser befestigt werden kann und das hintere Ende der Baugruppe (20) in der Umrahmung durch einen festen Anschlag (109) blockiert wird.

2. Elektrische Hilfsantriebsvorrichtung für ein Fahrrad nach Anspruch 1, wobei Mittel zur Steuerung (8) der elektrischen Maschine ebenfalls von dem Gestell (10) getragen werden.

3. Elektrische Hilfsantriebsvorrichtung für ein Fahrrad nach Anspruch 2, welche außerdem eine Batterie (7) zur Stromversorgung der elektrischen Maschine umfasst, wobei die Batterie ebenfalls von dem Gestell (10) getragen wird.

4. Elektrische Hilfsantriebsvorrichtung für ein Fahrrad nach einem der vorhergehenden Ansprüche, wobei die Baugruppe (20), die manuell von dem Gestell (10) trennbar ist, die Mittel zur Steuerung (8) der elektrischen Maschine umfasst.

5. Elektrische Hilfsantriebsvorrichtung für ein Fahrrad nach Anspruch 4, wobei die Baugruppe (20), die manuell von dem Gestell trennbar ist, die Batterie (7) umfasst.

6. Elektrische Hilfsantriebsvorrichtung für ein Fahrrad nach Anspruch 5, wobei die elektrische Maschine (2) an die Baugruppe (20) angeklappt werden kann.

7. Elektrische Hilfsantriebsvorrichtung für ein Fahrrad nach Anspruch 6, wobei die Batterie (7) außerdem, unabhängig von der Baugruppe (20), manuell von dem Gestell (10) trennbar ist.

8. Elektrische Hilfsantriebsvorrichtung für ein Fahrrad nach Anspruch 1, wobei die Baugruppe (20) in Querrichtung von dem Gestell (10) trennbar ist.

9. Elektrische Hilfsantriebsvorrichtung für ein Fahrrad nach einem der vorhergehenden Ansprüche, wobei das Gestell elektrische Schnellkupplungen umfasst, um die Baugruppe mit Schnittstellen zu verbinden, die mit dem Fahrrad fest verbunden sind.

10. Elektrische Hilfsantriebsvorrichtung für ein Fahrrad nach einem der vorhergehenden Ansprüche, wobei das Gestell (10) außerdem einen Gepäckträger bildet.

11. Elektrische Hilfsantriebsvorrichtung für ein Fahrrad nach einem der vorhergehenden Ansprüche, wobei die Befestigungsmittel einen Schwenkarm (41) umfassen, der in Bezug auf ein von dem Gestell getragenes Basisteil (42) gelenkig um eine Achse (43) angebracht ist, die im Wesentlichen parallel zur Achse (21) der elektrischen Maschine ist.

12. Elektrischer Hilfsbausatz für ein Fahrrad, der die elektrische Hilfsantriebsvorrichtung nach einem der vorhergehenden Ansprüche umfasst, wobei der elektrische Hilfsbausatz außerdem einen Reifen (5) umfasst, wobei der Reifen ein Luftreifen ist, der die komplementäre Verzahnung (51) aufweist.

13. Fahrrad (1) mit elektrischem Hilfsantrieb, welches den elektrischen Hilfsbausatz nach Anspruch 12 umfasst.

## Claims

1. Electric power-assist device for bicycles, said device comprising:
- an electrical machine (2) comprising a rotor,
- means (4) for fixing the electrical machine,
- a drive pinion (3) driven by the rotor of the electrical machine, and
- a supporting structure (10),
- the fixing means (4) being borne by the supporting structure (10),
said device being **characterized in that** the drive pinion (3) is able to mesh tangentially with a complementary toothing (51) integral to a tyre (5) of a rear wheel (61) of the bicycle, and **in that**, the fixing means (4) together with the electrical machine form a sub-assembly (20) which can be separated manually from the supporting structure, the supporting structure (10) comprising a framework (105) extending in a substantially horizontal plane and the sub-assembly is carried by the framework (105) and being **characterised by** a rapid fixing (108) realised in a manner that the sub-assembly can be slid horizontally in the framework (105) and be fixed there via the rapid fixing (108) at the front of the latter, and the rear end of the sub-assembly (20) is blocked in the framework by a fixed stop (109).

2. Electric power-assist device for bicycles according to claim 1, wherein means for controlling (8) the electrical machine are also borne by the supporting structure (10).

3. Electric power-assist device for bicycles according to claim 2 also comprising a battery (7) for powering the electrical machine, wherein the battery is also borne by the supporting structure (10).

4. Electric power-assist device for bicycles according to any of the preceding claims, wherein the sub-assembly (20) which can be separated manually from the supporting structure (10) comprises the means for controlling (8) the electrical machine.

5. Electric power-assist device for bicycles according to claim 4, wherein the sub-assembly (20) which can be separated manually from the supporting structure comprises the battery (7).

6. Electric power-assist device for bicycles according to claim 5, wherein the electrical machine (2) may be folded against the sub-assembly (20).

7. Electric power-assist device for bicycles according to claim 6, wherein the battery (7) can also be separated manually from the supporting structure (10) independently of the sub-assembly (20).

8. Electric power-assist device for bicycles according to claim 1, wherein the sub-assembly (20) can be separated transversely from the supporting structure (10).

9. Electric power-assist device for bicycles according to any of the preceding claims, wherein the supporting structure comprises rapid electrical connectors for connecting the sub-assembly to interfaces integral with the bicycle.

10. Electric power-assist device for bicycles according to any of the preceding claims, wherein the supporting structure (10) also constitutes a luggage rack.

11. Electric power-assist device for bicycles according to any of the preceding claims, wherein the fixing means comprise an oscillating arm (41) articulated relative to a mount (42) borne by the supporting structure, around an axis (43) substantially parallel to the axis (21) of the electrical machine.

12. Electric power-assist kit for bicycles comprising the electric power-assist device according to any of the preceding claims, said electric power-assist kit also comprising a tyre (5), said tyre being a pneumatic tyre comprising said complementary toothing (51).

13. Bicycle (1) with electric power-assist comprising the electric power-assist kit according to claim 12.
